# EUROPEAN PATENT APPLICATION

(11) **EP 4 528 888 A1**
(43) Date of publication of application: **26.03.2025**
(21) Application number: 24820523.9
(22) Date of filing: 22.03.2024
(51) Int. Cl.: H01M 10/617, H01M 10/6566, H01M 10/6561

(54) **BATTERY PACK WITH REDUCED TEMPERATURE DEVIATION**

(30) Priority: 14.06.2023 KR 20230076215; 21.03.2024 KR 20240039162
(71) Applicant: LG Energy Solution, Ltd., Seoul 07335 (KR)
(72) Inventor: HONG, Sangwoo, Daejeon 34122 (KR); PARK, Dongho, Daejeon 34122 (KR); YOO, Jiho, Daejeon 34122 (KR); LEE, Seungjun, Daejeon 34122 (KR); LEE, Yongtae, Daejeon 34122 (KR); LEE, Hyojin, Daejeon 34122 (KR)
(74) Representative: Plasseraud IP
(86) International application number: PCT/KR2024/003594
(87) International publication number: WO 2024/258005

(57) **Abstract**

A battery pack with improved temperature deviation can include a plurality of cell module assemblies; and a case that accommodates the plurality of cell module assemblies, wherein the case includes: an air inlet through which cooling air flows into the case; an air outlet through which the cooling air is discharged from the case; and a first side portion disposed on one side of the case, wherein the first side portion includes a plurality of first beads protruding from the first side portion inwardly into the case.

## Description

### [TECHNICAL FIELD]

The present disclosure relates to a battery pack, and more particularly, to a battery pack capable of improving the temperature deviation between battery cell module assemblies inside the battery pack.

### [BACKGROUND ART]

Unlike primary batteries which cannot be recharged, secondary batteries refer to batteries that can be charged and discharged, and are applied not only to portable devices but also to electric vehicles (EVs) and hybrid electric vehicles (HEVs) that are driven by an electrical drive source.

Types of secondary batteries currently widely used include lithium ion batteries, lithium polymer batteries, nickel cadmium batteries, nickel hydrogen batteries, and nickel zinc batteries. The operating voltage of such a unit secondary battery cell, that is, a unit battery cell, is approximately 2.5V to 4.6V. Therefore, when a higher output voltage is required, a battery pack is formed by connecting multiple battery cells in series. In addition, a battery pack may be formed by connecting multiple battery cells in parallel depending on the charge/discharge capacity required for the battery pack. Accordingly, the number of battery cells included in the battery pack may be set in various ways depending on the required output voltage or charge/discharge capacity.

When forming a battery pack by connecting multiple battery cells in series/parallel, it is common to first configure a battery module comprising at least one battery cell, preferably a plurality of battery cells, and to form the battery pack by using at least one such battery module and adding other components. In this case, the battery module refers to a component in which multiple battery cells are connected in series or parallel, and the battery pack refers to a component in which multiple battery modules are connected in series or parallel to increase capacity, output, etc.

Typically, a battery pack has a plurality of battery modules or battery module assemblies arranged on the same plane to maintain structural stability.

In such a battery pack, heat is generated during charging and discharging, and the generated heat needs to be removed through an appropriate cooling method.

For example, there is a cooling method that introduces cooling air into the battery pack.

However, there is a problem of temperature deviation occurring between the battery cell modules assemblies (CMAs) inside the battery pack, and the control of the temperature and temperature deviation of the battery pack is closely related to the battery life and performance. The smaller the temperature deviation, the better product quality and battery life can be expected.

### [DETAILED DESCRIPTION OF INVENTION]

### [TECHNICAL PROBLEMS]

The present disclosure provides a battery pack with improved temperature deviation between battery cell module assemblies.

### [TECHNICAL SOLUTION]

A battery pack with improved temperature deviation, in accordance with one embodiment of the present disclosure, includes: a plurality of cell module assemblies; and a case that accommodates the plurality of cell module assemblies, wherein the case includes: an air inlet through which cooling air flows into the case; an air outlet through which the cooling air is discharged from the case; and a first side portion disposed on one side of the case, wherein the first side portion includes a plurality of first beads protruding from the first side portion inwardly into the case.

Further, the case further includes a second side portion disposed to face the first side portion.

Further, the battery pack further includes: an inflow passage, disposed inwardly of the first side portion of the case, through which the cooling air flowing in from the air inlet moves; and an outflow passage, disposed inwardly of the second side portion of the case, through which the cooling air moves to be discharged through the air outlet.

Further, the case further includes: a third side portion disposed on another side of the case; and a fourth side portion disposed to face the third side portion.

Further, the air inlet is disposed on the third side portion, and the air outlet is disposed on the fourth side portion.

Further, the plurality of cell module assemblies are arranged along a direction from the third side portion to the fourth side portion.

Further, each of the plurality of first beads is formed so that an entire thickness of the first side portion protrudes inwardly into the case.

Further, each of the plurality of cell module assemblies is disposed in front of the first beads.

Further, each of the plurality of first beads is disposed on the first side portion to face a space between the plurality of cell module assemblies.

Further, the plurality of first beads are arranged to correspond in turn to the plurality of cell module assemblies adjacent to the third side portion.

Further, the plurality of first beads are disposed within 1/2 of a length of the first side portion from one end of the first side portion connected to the third side portion.

Further, a number of the plurality of first beads is equal to or less than 1/2 of a number of the plurality of cell module assemblies.

Further, each of the plurality of first beads has a trapezoidal shape in a plan view.

Further, each of the plurality of first beads has a triangular shape in a plan view.

Further, the plurality of first beads have heights protruding from the first side portion gradually increasing along a moving direction of the cooling air flowing in from the air inlet.

Further, a protrusion height of a first one of the plurality of first beads, located first from the air inlet, from the first side portion is 15% to 25% of a gap between the first side portion and one ends of the plurality of cell module assemblies, a protrusion height of a second one of the plurality of first beads located second from the air inlet is 35% to 45% of the gap between the first side portion and the one ends of the plurality of cell module assemblies, and a protrusion height of a third one of the plurality of first beads located third from the air inlet is 55% to 65% of the gap between the first side portion and the one ends of the plurality of cell module assemblies.

Further, vertical heights of the plurality of first beads on the first side portion gradually increase along a moving direction of the cooling air flowing in from the air inlet.

Further, the second side portion includes a plurality of second beads protruding from the second side portion inwardly into the case.

Further, the case further includes: a third side portion disposed on another side of the case; and a fourth side portion disposed to face the third side portion, wherein the plurality of second beads are arranged to correspond in turn to the plurality of cell module assemblies adjacent to the fourth side portion.

Further, heights of the plurality of second beads protruding from the second side portion gradually decrease in a reverse direction of the moving direction of the cooling air from the air outlet.

Further, the plurality of second beads are disposed within 1/2 of a length of the second side portion from one end of the second side portion connected to the fourth side portion.

Further, a number of the plurality of second beads is equal to or less than 1/2 of a number of the plurality of cell module assemblies.

### [EFFECT OF INVENTION]

The battery pack according to the present disclosure has improved temperature deviation between battery cell module assemblies inside the battery pack, thereby improving battery performance and increasing battery life.

In addition, the battery pack according to the present disclosure has improved temperature deviation and enhanced case rigidity, which results in reduced thickness due to the increased rigidity and reduced costs.

### [BRIEF DESCRIPTION OF THE DRAWING]

FIG. 1 is a perspective view of a battery pack according to a first embodiment of the present disclosure.
FIG. 2 is an exploded perspective view of the battery pack according to the first embodiment of the present disclosure.
FIG. 3 is a rear perspective view of the battery pack according to the first embodiment of the present disclosure.
FIG. 4 is a rear view of the battery pack according to the first embodiment of the present disclosure.
FIG. 5 is an internal plan view of the battery pack according to the first embodiment of the present disclosure.
FIG. 6 is a partial detailed view of FIG. 5.
FIG. 7 is a rear view of a battery pack according to a second embodiment of the present disclosure.
FIG. 8 is an internal plan view of a battery pack according to a third embodiment of the present disclosure.
FIG. 9 is an internal plan view of a battery pack according to a fourth embodiment of the present disclosure.
FIG. 10 is a partial detailed view of FIG. 9.
FIG. 11 is a rear view of FIG. 9.
FIG. 12 is a diagram showing the results of a temperature distribution simulation of the battery pack according to the fourth embodiment of the present disclosure.
FIG. 13 is a partial detailed view of a battery pack according to a fifth embodiment of the present disclosure.
FIG. 14 is a diagram showing various test examples of the present disclosure and comparative examples.
FIG. 15 is a diagram showing the temperature distribution of the test examples shown in FIG. 14.
FIG. 16 is a graph showing the flow rate of each cell module assembly in the test examples shown in FIG. 14.

### [MODE FOR CARRYING OUT THE INVENTION]

The advantages and features of the present disclosure and methods for achieving them will become apparent by referring to the embodiments described in detail below along with the accompanying drawings. However, the present disclosure is not limited to the embodiments disclosed below and will be implemented in various different forms. The present embodiments are provided merely to make the disclosure of the present disclosure complete and to fully inform a person of ordinary skill in the art to which the present disclosure pertains of the scope of the present disclosure, and the present disclosure is defined only by the scope of the claims. Accordingly, in some embodiments, well-known process steps, well-known device structures, and well-known techniques are not specifically described to avoid ambiguous interpretation of the present disclosure. Like reference numerals refer to like components throughout the specification.

In the drawings, in order to clearly represent multiple layers and areas, the thickness thereof may be shown to scale. Throughout the specification, like parts are given the same reference numerals. When it is described that a part such as a layer, membrane, region, plate, etc. is "on" another part, this includes not only a case where the part is "directly on" the other part, but also a case where there is other part between them. Conversely, when it is described that a part is "directly on" another part, it means that there is no other part between them. In addition, when it is described that a part such as a layer, membrane, region, plate, etc. is "under" another part, this includes not only a case where the part is "directly under" the other part, but also a case where there is other part between them. Conversely, when it is described that a part is "directly under" another part, it means that there is no other part between them.

Hereinafter, a battery pack with improved temperature deviation according to a preferred embodiment of the present disclosure will be described in detail with reference to the accompanying drawings.

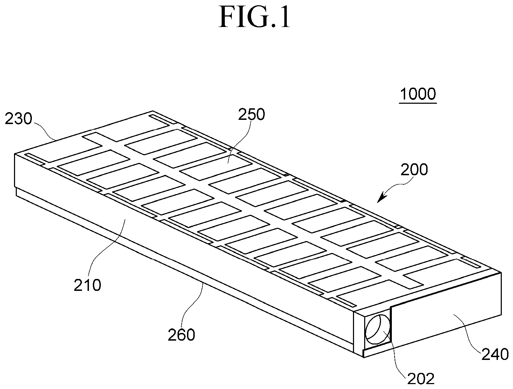

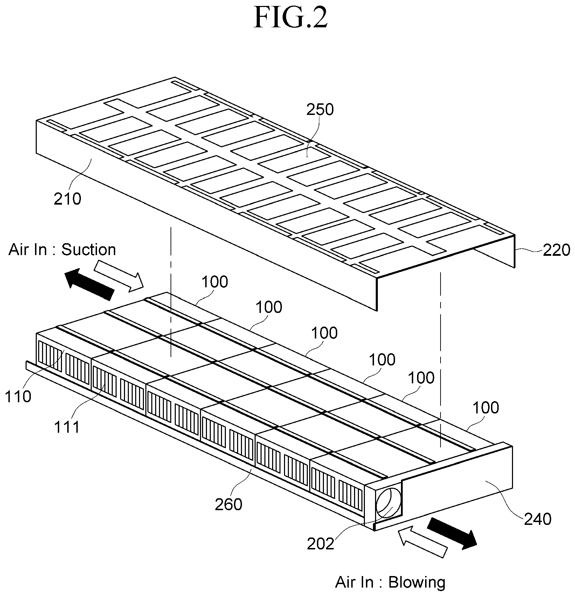

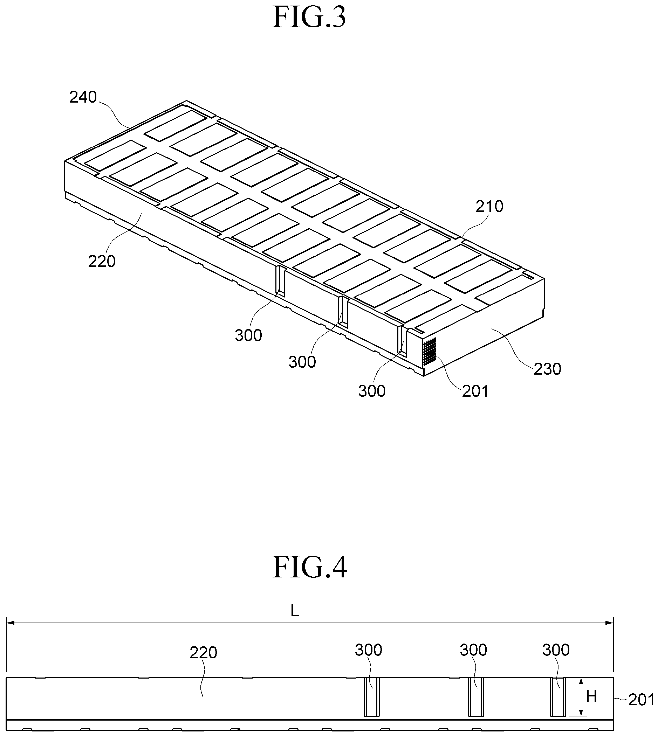

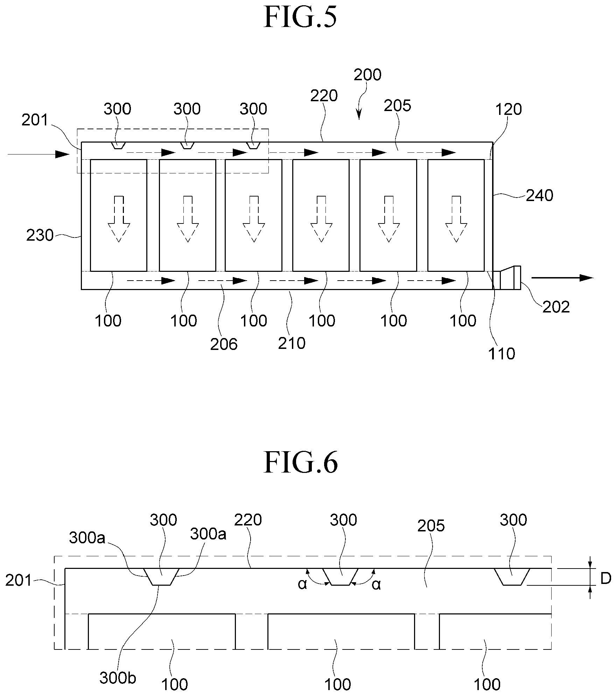

FIG. 1 is a perspective view of a battery pack according to a first embodiment of the present disclosure, FIG. 2 is an exploded perspective view of the battery pack according to the first embodiment of the present disclosure, FIG. 3 is a rear perspective view of the battery pack according to the first embodiment of the present disclosure, FIG. 4 is a rear view of the battery pack according to the first embodiment of the present disclosure, FIG. 5 is an internal plan view of the battery pack according to the first embodiment of the present disclosure, and FIG. 6 is a partial detailed view of FIG. 5.

A battery pack 1000 with improved temperature deviation according to the present disclosure includes a plurality of cell module assemblies (CMAs) 100 and a case 200 for accommodating the plurality of cell module assemblies 100.

The cell module assembly 100 accommodated in the battery pack 1000 includes a plurality of battery cells (not shown), and the plurality of battery cells in each cell module assembly 100 may be arranged in close contact.

Each battery cell may be, for example, a pouch-type battery cell.

As an example, the cell module assembly 100 may include a plurality of battery cells stacked on top of each other or in close contact with each other, and each battery cell may be provided with an electrode lead at a front and/or a rear end, with a positive lead at the front end and a negative lead at the rear end. In the cell module assembly 100, a plurality of battery cells may be arranged to be electrically connected to each other.

In the cell module assembly 100, the battery cell is not limited to the pouch-type battery cell and may be made of other types of battery cells, such as a prismatic battery cell.

The cell module assembly 100 may be disposed in the case 200 of the battery pack 1000 in an open form without a separate housing. In addition, as another example, the cell module assembly 100 may be in the form of a plurality of cells stored in a housing, and the cell module assembly 100 may be independently disposed in the case 200 of the battery pack 1000 with the cells in individual housings.

The case 200 is for accommodating a plurality of cell module assemblies 100, and may include a lower portion 260, an upper portion 250, a first side portion 220, a second side portion 210, and a third side portion 230, and a fourth side portion 240.

The lower portion 260 of the case 200 may be a horizontally extending plate that forms the bottom of the case 200, and a plurality of cell module assemblies 100 may be disposed on top of the lower portion 260.

As shown, the plurality of cell module assemblies 100 may be arranged at regular intervals in a direction from the third side portion 230 (located on the left side of the case 200 in FIG. 5) to the fourth side portion 240 (located on the right side of the case 200 in FIG. 5).

In the case 200, the third side portion 230 and the fourth side portion 240 may form the left and right sides of the case 200, respectively, in the present embodiment, and the third side portion 230 and the fourth side portion 240 may be disposed on the left and right edges of the lower portion 260, respectively.

As shown in FIGS. 3 to 6, the third side portion 230 of the case 200 may be formed in the shape of a square plate, and an air inlet 201 may be provided on the third side portion 230. The air inlet 201 is a place where cooling air for a coolant for cooling the cell module assemblies 100 disposed in the battery pack 1000 flows in, and the cooling air introduced through the air inlet 201 may be discharged through an air outlet 202 provided on the opposite fourth side portion 240 after cooling the cell module assemblies 100.

In the present embodiment, the air inlet 201 is provided at a rear portion of the third side portion 230 to which the first side portion 220 is connected, and the cooling air introduced through the air inlet 201 may flow through an inflow passage 205 between a rear plate 120, which will be described later, and the first side portion 220.

The fourth side portion 240 of the case 200 may be formed in a square plate shape and may be arranged parallel to the third side portion 230. In addition, a length of the fourth side portion 240 may be the same as that of the third side portion 230, and the air outlet 202 may be provided in the fourth side portion 240. The air outlet 202 is a place where the cooling air for the coolant for cooling the cell module assemblies 100 is discharged from the battery pack 1000. In the present embodiment, the air outlet 202 may be provided at a front portion of the fourth side portion 240 to which the second side portion 210 is connected. The air outlet 202 may be disposed diagonally from the air inlet 201 disposed in the third side portion 230 as shown in the drawings.

Accordingly, the cooling air that cools the cell module assemblies 100 may flow through an outflow passage 206 between a front plate 110, which will be described later, and the second side portion 210, to be discharged through the air outlet 202.

In the present embodiment, a fan (not shown) may be disposed in the air outlet 202. Accordingly, the cooling air introduced through the air inlet 201 may be discharged through the air outlet 202 by the fan disposed in the air outlet 202.

Further, as another embodiment, the fan may cause cooling air to flow into the case 200, and in this case, the air outlet 202 may serve as an air inlet and the air inlet 201 may serve as an air outlet.

In addition, in another embodiment, the fan may be disposed in the air inlet 201 instead of the air outlet 202. In this case, the fan may cause cooling air from the outside to be drawn into the battery pack, and the fan may cause cooling air inside the battery pack to be discharged to the outside.

In the case 200, the first side portion 220 and the second side portion 210 may form the rear and front surfaces of the case 200, respectively, in the present embodiment (see FIG. 5). The first side portion 220 and the second side portion 210 may be disposed at the rear and front edges of the lower portion 260, respectively. The second side portions 210 may be arranged parallel to the first side portion 220 to face each other, and a length of the second side portion 210 may be the same as a length of the first side portion 220.

In addition, as shown, inside the case 200, the front plate 110 may be disposed to be spaced inward from the second side portion 210 and parallel to the second side portion 210, and the rear plate 120 may be disposed to be spaced inward from the first side portion 220 and parallel to the first side portion 220.

Each cell module assembly 100 may be disposed between the front plate 110 and the rear plate 120, wherein one end of each cell module assembly 100 may be disposed on the rear plate 120 and the other end of each cell module assembly 100 may be disposed on the front plate 110.

In addition, the front plate 110 may have a plurality of openings 111 so that the other end of each cell module assembly 100 communicates with a space between the front plate 110 and the second side portion 210, and the rear plate 120 may have a plurality of openings so that one end of each cell module assembly 100 communicates with a space between the rear plate 120 and the first side portion 220.

Further, between the first side portion 220 and the rear plate 120 (one ends of the cell module assemblies 100), the inflow passage 205 may be formed through which cooling air flowing in from the air inlet 201 moves, and an outflow passage 206 may be formed between the second side portion 210 and the front plate 110 (the other ends of the cell module assemblies 100).

Accordingly, the cooling air may pass through the openings of the rear plate 120 to each cell module while moving through the inflow passage 205 between the first side portion 220 and the rear plate 120 (one ends of the cell module assemblies 100), and then move through the openings 111 of the front plate 110 to the outflow passage 206 between the second side portion 210 and the front plate 110 (the other ends of the cell module assemblies 100) to be discharged through the air outlet 202.

In each cell module assembly 100, the electrode leads (anode/cathode leads) of the battery cells may be electrically connected to the front plate 110 and the rear plate 120, respectively.

In this way, the first side portion 220, the second side portion 210, the third side portion 230, and the fourth side portion 240 of the case 200 may form the side surfaces of the case 200.

The upper portion 250 is disposed on the top of the case 200, and the upper portion 250 is disposed above the battery cell assemblies 100 in the form of a plate extending in the horizontal direction, and the first side portion 220, the second side portion 210, the third side portion 230, and the fourth side portion 240 are connected at the edges of the upper portion 250. In the present embodiment, the upper portion 250 may be formed integrally with the first side portion 220 and the second side portion 210.

In the present embodiment, the case 200 is shown in the form of a square box as shown, but may be configured in various shapes including a polygonal shape, without being limited to the above.

In addition, in the present disclosure, a plurality of beads 300 and 350 may be disposed on the inner side of the first side portion 220 and/or the second side portion 210 of the case 200.

FIG. 5 is an internal plan view of the battery pack 1000 according to the first embodiment of the present disclosure. In the first embodiment of the present disclosure, six cell module assemblies 100 are disposed, and three first beads 300 may be disposed on the inner side of the first side portion 220 of the case 200. In addition, the first beads 300 may be disposed within 1/2 of a length L of the first side portion 220 from one end of the first side portion 220 connected to the third side portion 230 (to the other end of the first side portion 220 connected to the fourth side portion 240), and the number of the first beads 300 may be 1/2 or less than 1/2 of the number of cell module assemblies 100.

The first bead 300 is intended to improve the temperature deviation between the cell module assemblies 100 inside the pack. In the first embodiment, the first bead 300 is formed to protrude from the first side portion 220 toward the cell module assemblies 100, and three first beads 300 may be disposed along the moving direction of cooling air from one end portion of the first side portion 220 adjacent to the air inlet 201

Therefore, in the first embodiment, the first beads 300 may be disposed on the first side portion 220 to correspond to the three cell module assemblies 100 adjacent to the air inlet 201 (or the third side portion 230), respectively. As shown, each first bead 300 may be placed at a position corresponding to the center of one end of each cell module assembly 100.

The first bead 300 may be formed by pressing the first side portion 220 during the manufacturing process, so that the entire thickness of the first side portion 220 protrudes inside the case 200, and as shown in FIGS. 5 and 6, the first bead 300 may have a trapezoidal shape in a plan view.

Specifically, the first bead 300 may include two inclined surface portions 300a bent at the first side portion 220 and a protruding end portion 300b connecting the two inclined surface portions 300a.

Further, of the two parallel sides of the trapezoidal first bead 300 in a plan view, the long side may be located on the same plane as the first side portion 220, and the short side may correspond to the protruding end portion 300b of the first bead 300. The inclination angle α of the inclined surface portion 300a with respect to the first side portion 220 in the first bead 300 may form an obtuse angle, and may specifically be within a range of 130 to 140 degrees or around 135 degrees. That is, the inclined surface portion 300a may be in the range of 40 to 50 degrees or around 45 degrees with respect to the long side of the trapezoid.

The protruding end portion 300b may be a plane connecting the ends of the two inclined surface portions 300a, and may be formed parallel to the first side portion 220.

In the present disclosure, the cross-section of the first bead 300 is formed in a trapezoidal shape, so that the cooling air introduced through the air inlet 201 moves linearly and then moves along the inclined surface portion 300a to be guided to each cell module assembly 100.

A height D of the first bead 300 protruding from the first side portion 220 may be within about 25 to 35% or about 55 to 65% of a gap between the first side portion 220 and the rear plate 120. For example, the protrusion height of the first bead 300 may be approximately 7.5 mm or approximately 15 mm. In the first embodiment, three identical first beads 300 may be disposed and the protrusion heights D of the first beads 300 may be the same.

Further, A vertical height H between the top and bottom of the first bead 300 on the first side portion 220 may be 50 to 100%, 60 to 90%, or 70 to 80% of a height of the first side portion 220.

As described above, in the battery pack 1000, cooling air moves through the inflow passage 205 between the rear plate 120 and the first side portion 220, passes through the openings of the rear plate 120 to each cell module assembly 100, and then moves to the outflow passage 206 between the front plate 110 and the second side portion 210 through the openings 111 of the front plate 110 to be discharged through the air outlet 202. In this case, a small flow rate of cooling air flows into the cell module assembly 100 disposed adjacent to the air inlet 201, resulting in reduced cooling efficiency.

In the present disclosure, by disposing the first beads 300 on the first side portion 220, the rigidity of the pack can be reinforced and the thickness of the case can be reduced due to the rigidity reinforcement, thereby achieving a cost reduction effect. In addition, in the present disclosure, cooling air is smoothly introduced to the cell module assembly 100 adjacent to the air inlet 201, thereby reducing the temperature deviation between the cell module assemblies 100, thereby improving the quality of the battery pack and the battery life.

Next, a battery pack 1000 with improved temperature deviation according to a second embodiment of the present disclosure will be described.

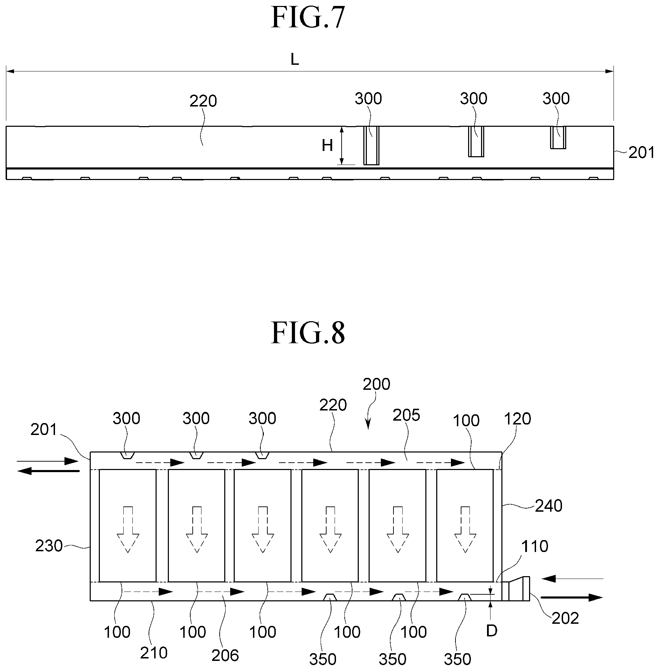

FIG. 7 is a rear view of the battery pack 1000 according to the second embodiment of the present disclosure.

The difference between the battery pack 1000 according to the second embodiment of the present disclosure and that of the first embodiment is that the vertical heights H between the top and bottom of the three first beads 300 on the first side portion 220 is the same in the first embodiment, whereas in the second embodiment, the vertical heights H of the three first beads 300 are different from each other.

In the present embodiment, the vertical heights H of the first beads 300 on the first side portion 220 may be set to gradually increase along the moving direction of the cooling air from one end of the first side portion 220 adjacent to the air inlet 201.

Specifically, compared to the vertical height H of the 1st first bead 300 (located on the far right in FIG. 7) closest to the air inlet 201, the vertical height H of the 2nd first bead 300 may increase by 10 to 20%, and the vertical height H of the 3rd first bead 300 furthest from the air inlet 201 may increase by 20 to 30% compared to the vertical height H of the 1st first bead 300.

In the second embodiment, the vertical heights H of the first beads 300 are set to gradually increase along the moving direction of the cooling air from the air inlet 201, thereby preventing excessive inflow of cooling air to the first cell module assembly 100 corresponding to the 1st first bead 300 and efficiently distributing the cooling air to reduce temperature deviation.

Next, a battery pack 1000 with improved temperature deviation according to a third embodiment of the present disclosure will be described.

FIG. 8 is an internal plan view of the battery pack 1000 according to the third embodiment of the present disclosure.

The difference between the battery pack 1000 according to the third embodiment of the present disclosure and that of the first embodiment is that the first beads 300 are disposed only on the first side portion 220 in the first embodiment, whereas in the third embodiment, the beads are also disposed on the second side portion 210.

In the third embodiment, six cell module assemblies 100 are disposed inside the case 200, three first beads 300 are disposed on the inner side of the first side portion 220 of the case 200, and three second beads 350 identical to the first beads 300 may be disposed on the inner side of the second side portion 210. The size of the second beads 350 may be the same as that of the first beads 300.

In the present embodiment, in the same manner as in the first embodiment, the three first beads 300 disposed on the first side portion 220 may be formed to protrude from the first side portion 220 toward the cell module assemblies 100, may be disposed along the moving direction of the cooling air from one end of the first side portion 220 adjacent to the air inlet 201, and may be disposed to correspond to three cell module assemblies 100 adjacent to the air inlet 201, respectively.

In the present embodiment, the three second beads 350 disposed on the second side portion 210 are intended to improve the temperature deviation between the cell module assemblies 100 like the first beads 300, and the second beads 350 has the same configuration as the first beads 300. The second beads 350 may be formed to protrude from the second side portion 210 toward the cell module assemblies 100, may be disposed in the reverse direction of the moving direction of cooling air from one end of the second side portion 210 adjacent to the air outlet 202, and may be arranged to correspond to the three cell module assemblies 100 adjacent to the air outlet 202, respectively.

Like the first bead 300, the second bead 350 may be formed so that the entire thickness of the second side portion 210 protrudes inwardly into the case 200, and may have a trapezoidal shape in a plan view. Further, of the two parallel sides of the trapezoidal second bead 350, the long side may be located on the same plane as the second side portion 210, and the short side may be placed at the protruding end of the second bead 350.

In the present disclosure, the cross-section of the second bead 350 is formed in a trapezoidal shape, so that the cooling air that cools the cell module assemblies 100 and moves along the outflow passage 206 may be guided to each cell module assembly 100 along the inclined sides of the trapezoid.

The height of the second bead 350 protruding from the second side portion 210 may be the same as that of the first bead 300. For example, the second bead 350 may be within about 25 to 35% or about 55 to 65% of the gap between the second side portion 210 and the other end of the cell module assembly 100 (front plate 110). For example, the protrusion height of the second bead 350 may be approximately 7.5 mm or approximately 15 mm. In the present embodiment, the protrusion heights of the three second beads 350 may be the same.

In addition, the second beads 350 may be disposed within 1/2 of the length of the second side portion 210 from one end of the second side portion 210 connected to the fourth side portion 240 (to the other end of the second side portion 210 connected to the third side portion 230), and the number of the second beads 350 may be 1/2 or less than 1/2 of the number of cell module assemblies 100.

Therefore, in the present embodiment, the first beads 300 may be disposed on the first side portion 220 adjacent to the air inlet 201 as many as the number of cell module assemblies 100 corresponding to half of the total cell module assemblies 100, and the second beads 350 may be disposed on the second side portion 210 adjacent to the air outlet 202 as many as the number of the remaining half cell module assemblies 100.

In the present embodiment, the cooling air moving through the inflow passage 205 between the rear plate 120 and the first side portion 220 can be smoothly guided to the cell module assembly 100 adjacent to the air inlet 201 by the first bead 300 of the first side portion 220, and additionally, the cooling air moving through the outflow passage 206 between the front plate 110 and the second side portion 210 can be guided to the cell module assembly 100 adjacent to the air outlet 202 by the second bead 350 of the second side portion 210 before being discharged through the air outlet 202, thereby further reducing the temperature deviation between the cell module assemblies 100.

Other configurations and effects are the same as those of the first embodiment, so detailed description thereof will be omitted herein.

Next, the battery pack 1000 with improved temperature deviation according to a fourth embodiment of the present disclosure will be described.

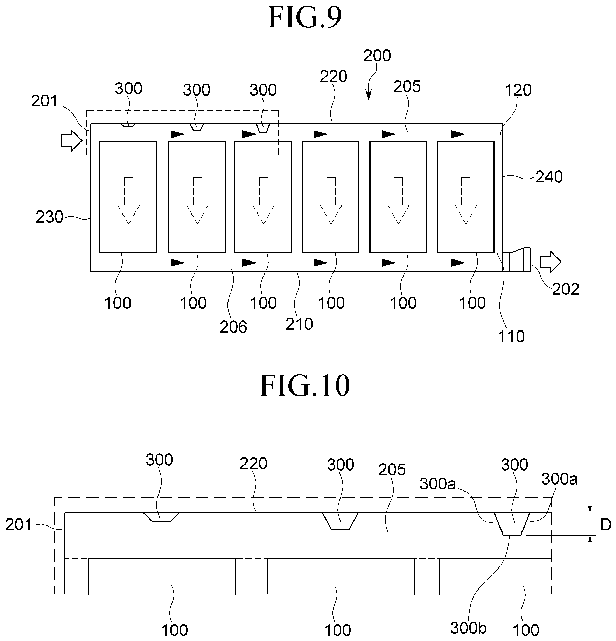

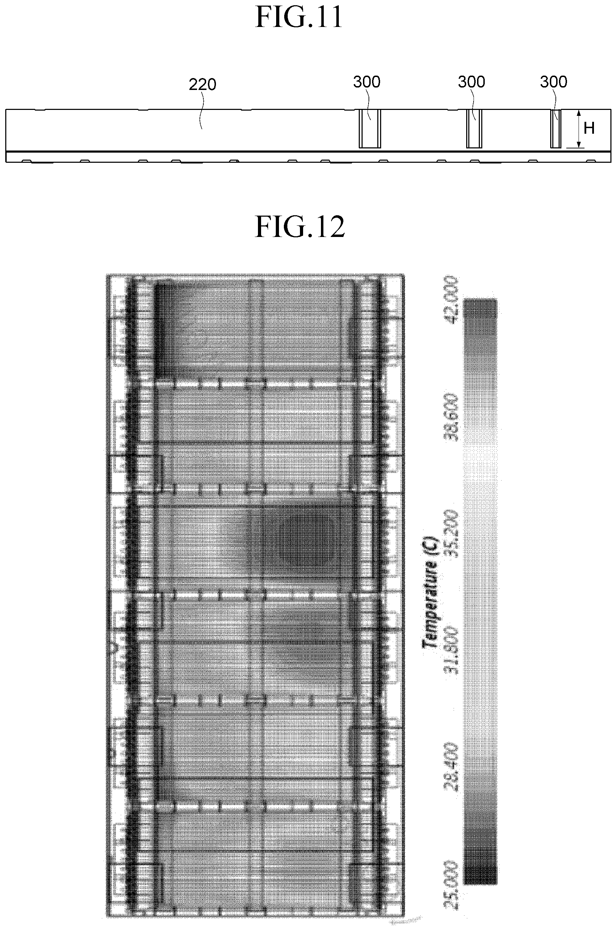

FIG. 9 is an internal plan view of the battery pack according to the fourth embodiment of the present disclosure, FIG. 10 is a partial detailed view of FIG. 9, FIG. 11 is a rear view of FIG. 9, and FIG. 12 is a diagram showing simulation results of the temperature distribution of the battery pack according to the fourth embodiment of the present disclosure.

The difference between the battery pack 1000 according to the fourth embodiment of the present disclosure and that of the first embodiment is that three identical first beads 300 are disposed on the first side portion 220 in the first embodiment, whereas the fourth embodiment, the first beads 300 have different heights D protruding from the first side portion 220 (distances between the first side portion 220 and the protruding ends 300b of the first beads 300).

In the fourth embodiment, the first beads 300 may be disposed on the first side portion 220 to correspond to the three cell module assemblies 100 adjacent to the air inlet 201, respectively, and the heights D of the first beads 300 protruding from the first side portion 220 may be set to gradually increase along the moving direction of cooling air from one end of the first side portion 220 adjacent to the air inlet 201.

Specifically, the height D of the 1st first bead 300, closest to the air inlet 201, protruding from the first side portion 220 may be within about 15 to 25% of the gap between the first side portion 220 and one end of the cell module assembly 100 (or the rear plate 120), the height D of the 2nd first bead 300 protruding from the first side portion 220 may be within about 35 to 45% of the gap between the first side portion 220 and one end of the module assembly 100 (or the rear plate 120), and the height D of the 3rd first bead 300 protruding from the first side portion 220 may be within about 55 to 65% of the gap between the first side portion 220 and one end of the cell module assembly 100 (or the rear plate 120). For example, for the height of the first bead 300 protruding from the first side portion 220, the height of the 1st first bead 300 may be approximately 5 mm, the height of the 2nd first bead 300 may be approximately 10 mm, and the height of the 3rd first bead 300 may be approximately 15 mm. Further, as shown in FIG. 11, the widths of the first bead 300 in the left-right direction on the first side portion 220 may be formed to gradually increase along the moving direction of the cooling air.

In the fourth embodiment, the first beads 300 are arranged so that the height D protruding from the first side portion 220 gradually increases, so that excessive inflow of cooling air to the first cell module assembly 100 corresponds to the 1st first bead 300 is prevented and the cooling air is efficiently distributed, thereby reducing temperature deviation. Other configurations are the same as those of the first bead 300 in the first embodiment.

Meanwhile, FIG. 12 shows the results of a temperature distribution simulation using CFD (Computational fluid dynamics) to simulate the temperature deviation in the battery pack 1000 according to the fourth embodiment.

In the present embodiment, the temperature distribution showed the minimum temperature deviation (2.5/3.37) for each CP compared to a general battery pack without beads, as shown in Table 1 described later, and the temperature deviation was reduced by 70%/42%.

Meanwhile, in the present embodiment, the first bead 300 is disposed only on the first side portion 220, but in another embodiment, the second bead 350 may also be disposed on the second side portion 210, and the second bead 350 disposed on the second side portion 210 may be disposed to correspond to each of the three cell module assemblies 100 adjacent to the air outlet 202. In this case, the heights of the second beads 350 protruding from the second side portion 210 may be set to gradually decrease along the reverse direction of the moving direction of the cooling air from the air outlet 202. The height of the 1st second bead 350, closest to the air outlet 202, protruding from the second side portion 210 may be within about 60 ± 5% of the gap between the second side portion 210 and the other end of the cell module assembly 100 (the front plate 110), the height of the 2nd second bead 350 may be within about 40 ± 5% of the gap between the second side portion 210 and the other end of the cell module assembly 100 (the front plate 110), and the height of the 3rd second bead 350 may be within about 20 ± 5% of the gap between the second side portion 210 and the other end of the cell module assembly 100 (the front plate 110).

Next, a battery pack 1000 with improved temperature deviation according to a fifth embodiment of the present disclosure will be described.

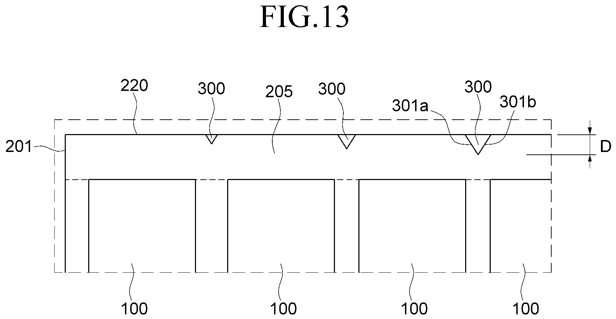

FIG. 13 is a partial detailed view of the battery pack according to the fifth embodiment of the present disclosure.

The difference between the battery pack 1000 according to the fifth embodiment of the present disclosure and those of the previous embodiments is that the first bead 300 (or the second bead 350) has a different shape in a plan view.

That is, in the previous embodiments, the first bead 300 (or the second bead 350) is formed in a trapezoidal shape in a plan view, but in the present embodiment, it may be formed in a triangular shape in a plan view.

As shown in FIG. 13, the first bead 300 (or second bead 350) may include a first inclined surface portion 301a bent from the first side portion 220, and a second inclined surface portion 301b bent from the first inclined surface portion 301a and connected to the first side portion 220.

In addition, the inclination angle of the first inclined surface portion 301a with respect to the first side portion 220 in the first bead 300 may be an obtuse angle, and specifically in a range of 130 to 140 degrees or approximately 135 degrees. That is, the first inclined surface portion 301a may be within the range of 40 to 50 degrees or around 45 degrees with respect to an imaginary line connecting the first inclined surface portion 301a and the second inclined surface portion 301b, which are separated from each other.

The second inclined surface portion 301b is bent at the end of the first inclined surface portion 301a and extends toward of the first side portion 220, and the end of the second inclined surface portion 301b may be connected to the first side portion 220. The inclination angle of the second inclined surface portion 301b with respect to the first side portion 220 may be the same as that of the first inclined surface portion 301a. That is, the inclination angle of the second inclined surface portion 301b with respect to the first side portion 220 may be an obtuse angle, and specifically in the range of 130 to 140 degrees or approximately 135 degrees.

Further, in the present embodiment, the plurality of first beads 300 (or second beads 350) disposed on the first side portion 220 may be formed so that their planar cross-sectional areas gradually increase while maintaining a triangular shape along the moving direction of cooling air from one end of the first side portion 220 adjacent to the air inlet 201. That is, the plurality of first beads 300 (or second beads 350) disposed on the first side portion 220 may have the same inclination angle of the first inclined surface portion 301a and the second inclined surface portion 301b, but may be formed such that, as the planar cross-sectional area increases, the height D protruding from the first side portion 220 gradually increases along the moving direction of the cooling air from one end of the first side portion 220 adjacent to the air inlet 201.

Specifically, the height D of the 1st first bead 300, closest to the air inlet 201, protruding from the first side portion 220 may be within about 15 to 25% of the gap between the first side portion 220 and one end of the cell module assembly 100 (or the rear plates 120), the height D of the 2nd first bead 300 protruding from the first side portion 220 may be within about 35 to 45% of the gap between the first side portion 220 and one end of the cell module assembly 100 (or the rear plate 120), and the height D of the 3rd first bead 300 protruding from the first side portion 220 may be within about 55 to 65% of the gap between the first side portion 220 and one end of the cell module assembly 100 (or the rear plate 120).

In the present embodiment, the first bead 300 (or second bead 350) may be arranged on the first side portion 220 to face a space between the cell module assemblies 100, and may be disposed in an area where an extension of the space between two cell module assemblies 100 meets the first side portion 220. In this way, by arranging the first bead 300 on the first side portion 220 to face the space between the cell module assemblies 100, cooling air can be smoothly guided into the space between the cell module assemblies 100.

In the present embodiment, the cooling air introduced through the air inlet 201 moves linearly and then moves along the first inclined surface portion 301a, thereby allowing the cooling air to be guided between the cell module assemblies 100. In FIG. 13, the distance between the first beads 300 is shown to be the same, but the distance between the 1st first bead 300 and the 2nd first bead 300 is longer than the distance from the air inlet 210 to the 1st first bead.

### [Test example]

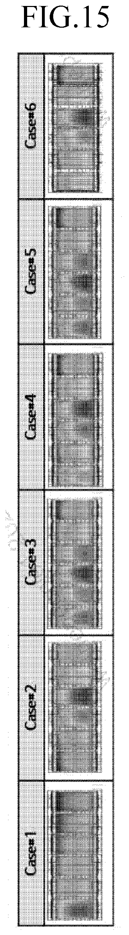

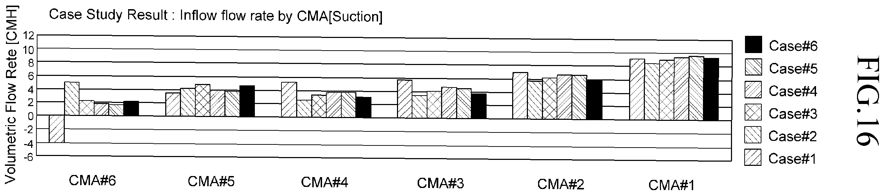

To confirm the effect of reducing temperature deviation according to the present disclosure, a temperature distribution simulation was performed using CFD (Computational fluid dynamics), and the results are shown in FIGS. 15 and 16.

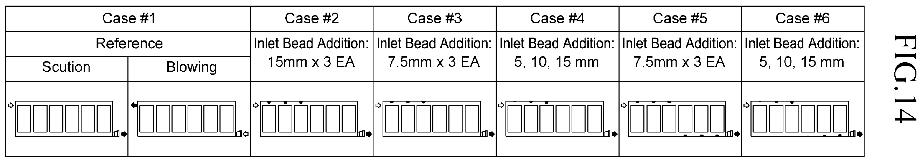

FIG. 14 is a diagram showing various test examples of the present disclosure and comparative examples, FIG. 15 is a diagram showing the temperature distribution of the test example shown in FIG. 14, and FIG. 16 is a graph showing the flow rate of each cell module assembly in the test examples shown in FIG. 14.

FIG. 14 shows examples of bead application arrangement for performing temperature distribution simulation. In FIG. 14, Case#1 shows a general battery pack without the beads of the present disclosure, Case#2 shows a battery pack according to the first embodiment of the present disclosure in which three beads are arranged on the first side portion and each bead has a protrusion height of 15 mm, Case#3 shows a battery pack according to the first embodiment of the present disclosure in which three beads are arranged on the first side portion and the protrusion height of each bead is 7.5 mm, Case#4 shows a battery pack according to the fourth embodiment of the present disclosure in which three beads are arranged on the first side portion and the protrusion heights of the beads are 5 mm, 10 mm, and 15 mm, respectively, Case#5 shows a battery pack according to the third embodiment of the present disclosure in which three beads are disposed on each of the first side portion and the second side and each bead has a protruding height of 7.5 mm, and Case#6 shows a battery pack according to the fourth embodiment of the present disclosure in which three beads with protruding heights of 5 mm, 10 mm, and 15 mm are arranged on the first side portion, and in addition, three beads with protruding heights of 5 mm, 10 mm, and 15 mm are arranged on the second side portion.

Tables 1 and 2 below show the results of temperature distribution simulation in the respective cases of FIG. 14.

**[Table 1] 0.25CP Heat Source Temperature**

| Temp[ °C] | Case#1 | Case#2 | Case#3 | Case#4 | Case#5 | Case#6 |
|---|---|---|---|---|---|---|
| Max Temp[ °C] | 33.82 | 31.73 | 31.44 | 31.37 | 31.53 | 31.57 |
| **Min** Temp[ °C] | 29.38 | 28.33 | 28.73 | 28.87 | 28.71 | 28.86 |
| Temperature deviation | 4.44 | 3.40 | 2.71 | 2.50 | 2.82 | 2.71 |

**[Table 2] 0.5CP Heat Source Temperature**

| Temp[ °C] | Case#1 | Case#2 | Case#3 | Case#4 | Case#5 | Case#6 |
|---|---|---|---|---|---|---|
| **Max** Temp[ °C] | 45.04 | 42.20 | 41.87 | 41.78 | 41.97 | 42.02 |
| **Min** Temp[ °C] | 39.25 | 37.02 | 38.13 | 38.41 | 38.10 | 38.40 |
| Temperature deviation | 5.79 | 5.18 | 3.74 | 3.37 | 3.87 | 3.62 |

Table 1 shows the maximum temperature and the minimum temperature for each case when 25°C cooling air is injected at 0.25CP Heat Source Temperature (1cp is the power that can fully charge the battery in 1 hour), and Table 2 shows the maximum temperature and the minimum temperature for each case when 25°C cooling air is injected at 0.5CP Heat Source Temperature, and it is shown that the temperature deviation was reduced in all cases (Case#2~6) according to the disclosure compared to the conventional case (Case#1), and the minimum temperature deviation was confirmed in Case#4.

Meanwhile, Table 3 and FIG. 16 show the inlet flow rate for each case in the cell module assembly 100, wherein CMA#6 to CMA#1 indicate the cell module assemblies (sequentially arranged in the direction from the air inlet 201 to the air outlet 202), CMA#6 represents the cell module assembly 100 closest to the air inlet 201, and CMA#1 represents the cell module assembly 100 closest to the air outlet 202.

It can be seen that the inlet flow rate generally increases from CMA#6, which is the cell module assembly 100 closest to the air inlet 201, to the air outlet 202, and it can be seen that CMA#1, which is the cell module assembly 100 closest to the air outlet 202, shows the highest inlet flow rate.

In addition, it is shown that the flow rate deviation is reduced in the cases (Case#2 to Case#6) according to the disclosure compared to Case#1, which is a general battery pack without the beads of the present disclosure.

**[Table 3] Inflow flow rate by CMA [CMH]**

| Num. | Case#1 | Case#2 | Case#3 | Case#4 | Case#5 | Case#6 |
|---|---|---|---|---|---|---|
| CMA#1 | 9.11 | 8.49 | 8.99 | 9.36 | 9.63 | 9.38 |
| CMA#2 | 6.98 | 5.69 | 6.22 | 6.70 | 6.68 | 5.99 |
| CMA#3 | 5.68 | 3.46 | 4.11 | 4.69 | 4.54 | 3.75 |
| CMA#4 | 5.29 | 2.60 | 3.45 | 3.81 | 3.70 | 3.16 |
| CMA#5 | 3.55 | 4.26 | 4.84 | 3.92 | 3.83 | 4.68 |
| CMA#6 | -4.21 | 4.97 | 2.21 | 1.85 | 1.68 | 2.28 |
| Flow rate deviation | 13.32 | 5.88 | 6.78 | 7.52 | 7.95 | 7.11 |
| Max-Min | | | | | | |

As described above, the battery pack according to the present disclosure can improve battery life by minimizing temperature deviation, and battery performance and battery operation safety can be secured due to the improved battery life.

Although the present disclosure has been described with reference to preferred embodiments as discussed above, the present disclosure is not limited to the above-described embodiments and various changes and modifications may be made by those having ordinary skill in the art to which the present disclosure pertains without departing from the idea of the present disclosure.

### [INDUSTRIAL APPLICABILITY]

The present disclosure can provide a battery pack a battery pack in which the temperature deviation between battery cell assemblies in a battery pack is improved, resulting in improved battery performance and increased battery life.

## Claims

1. A battery pack with improved temperature deviation, the battery pack comprising:
a plurality of cell module assemblies; and
a case that accommodates the plurality of cell module assemblies,
wherein the case includes:
an air inlet through which cooling air flows into the case;
an air outlet through which the cooling air is discharged from the case; and
a first side portion disposed on one side of the case, wherein the first side portion includes a plurality of first beads protruding from the first side portion inwardly into the case.

2. The battery pack of claim 1, wherein the case further includes a second side portion disposed to face the first side portion.

3. The battery pack of claim 2, further comprising:
an inflow passage, disposed inwardly of the first side portion of the case, through which the cooling air flowing in from the air inlet moves; and
an outflow passage, disposed inwardly of the second side portion of the case, through which the cooling air moves to be discharged through the air outlet.

4. The battery pack of claim 2, wherein the case further includes:
a third side portion disposed on another side of the case; and
a fourth side portion disposed to face the third side portion.

5. The battery pack of claim 4, wherein the air inlet is disposed on the third side portion, and the air outlet is disposed on the fourth side portion.

6. The battery pack of claim 4, wherein the plurality of cell module assemblies are arranged along a direction from the third side portion to the fourth side portion.

7. The battery pack of claim 1, wherein each of the plurality of first beads is formed so that an entire thickness of the first side portion protrudes inwardly into the case.

8. The battery pack of claim 1, wherein each of the plurality of first beads is disposed on the first side portion to face a space between the plurality of cell module assemblies.

9. The battery pack of claim 1, wherein each of the plurality of first beads has a trapezoidal shape in a plan view.

10. The battery pack of claim 5, wherein the plurality of first beads are disposed within 1/2 of a length of the first side portion from one end of the first side portion connected to the third side portion.

11. The battery pack of claim 10, wherein a number of the plurality of first beads is equal to or less than 1/2 of a number of the plurality of cell module assemblies.

12. The battery pack of claim 1, wherein each of the plurality of first beads has a triangular shape in a plan view.

13. The battery pack of claim 1, wherein the plurality of first beads have heights protruding from the first side portion gradually increasing along a moving direction of the cooling air flowing in from the air inlet.

14. The battery pack of claim 13, wherein a protrusion height of a first one of the plurality of first beads located first from the air inlet from the first side portion is 15% to 25% of a gap between the first side portion and one ends of the plurality of cell module assemblies, a protrusion height of a second one of the plurality of first beads located second from the air inlet is 35% to 45% of the gap between the first side portion and the one ends of the plurality of cell module assemblies, and a protrusion height of a third one of the plurality of first beads located third from the air inlet is 55% to 65% of the gap between the first side portion and the one ends of the plurality of cell module assemblies.

15. The battery pack of claim 1, wherein vertical heights of the plurality of first beads on the first side portion gradually increase along a moving direction of the cooling air flowing in from the air inlet.

16. The battery pack of claim 2, wherein the second side portion includes a plurality of second beads protruding from the second side portion inwardly into the case.

17. The battery pack of claim 16, wherein the case further includes:
a third side portion disposed on another side of the case; and
a fourth side portion disposed to face the third side portion, and
wherein the plurality of second beads are arranged to correspond in turn to the plurality of cell module assemblies adjacent to the fourth side portion.

18. The battery pack of claim 17, wherein heights of the plurality of second beads protruding from the second side portion gradually decrease in a reverse direction of a moving direction of the cooling air from the air outlet.

19. The battery pack of claim 18, wherein the plurality of second beads are disposed within 1/2 of a length of the second side portion from one end of the second side portion connected to the fourth side portion.

20. The battery pack of claim 19, wherein a number of the plurality of second beads is equal to or less than 1/2 of a number of the plurality of cell module assemblies.
